# EUROPEAN PATENT APPLICATION

(11) **EP 2 302 271 A2**
(43) Date of publication of application: **30.03.2011**
(21) Application number: 10251586.3
(22) Date of filing: 13.09.2010
(51) Int. Cl.: F16K 24/04

(54) **Self sealing drain fitting**

(30) Priority: 24.09.2009 US 566031
(71) Applicant: Hamilton Sundstrand Corporation, Windsor Locks, CT 06096-1010 (US)
(72) Inventor: Army, Donald E., Jr., Enfield, CT 06082 (US); Shiroma, Diana, Windsor, CT 06095 (US)
(74) Representative: Tomlinson, Kerry John

(57) **Abstract**

Disclosed is a drain assembly including a buoyant spherical ball (32) and a drain fitting (10) including at least one drain channel (28). The drain fitting (10) is securable at a drain location (18) wherein pressurization at the drain location (18) seals the spherical ball (32) against the drain channel (28). Further disclosed is a method of operating a drain assembly for an environmental control system (14) including locating the drain assembly at a fluid collection area (22) of the environmental control system (14). The drain assembly includes a buoyant spherical ball (32) and a drain fitting (10) including at least one drain channel (28) securable at a drain location (18). An interior (22) of the environmental control system (14) is pressurized and the spherical ball (32) is sealed to the drain fitting (10) via the pressurization of the interior (22) of the environmental control system (14).

## Description

### BACKGROUND OF THE INVENTION

The subject matter disclosed herein generally relates to environmental control systems. More particularly, the subject matter disclosed herein relates to drainage of excess fluid from environmental control systems.

When an environmental control system (ECS) shuts down, water pools at various locations in the ECS, for example, in the headers and the core of the condenser. When the ECS is then restarted, the excess water can be ejected from the system through, for example, cooling vents, onto components of, for example, a helicopter cockpit. To reduce the amount of excess water in the ECS, open weep holes are installed at low points of the ECS to allow the water to drain as it accumulates. Because the weep holes are always open, however, there is air leakage from the ECS through the weep holes during operation which causes a significant performance drop when compared to an ECS without weep holes. The part would well receive a drainage solution which reduces the amount of excess moisture while reducing the performance impact of the weep hole configuration.

### BRIEF DESCRIPTION OF THE INVENTION

According to one aspect of the invention, a drain assembly includes a buoyant spherical ball and a drain fitting including at least one drain channel. The drain fitting is securable at a drain location wherein pressurization at the drain location seals the buoyant spherical ball against the drain channel.

According to another aspect of the invention, an environmental control system includes a collection area of fluid in the environmental control system and a drain assembly located at the collection area. The drain assembly includes a buoyant spherical ball and a drain fitting including at least one drain channel. The drain fitting is securable at a drain location wherein pressurization of the environmental control system at the drain location seals the buoyant spherical ball against the drain channel.

According to yet another aspect of the invention, a method of operating a drain assembly for an environmental control system includes locating the drain assembly at a fluid collection area of the environmental control system. The drain assembly includes a buoyant spherical ball and a drain fitting including at least one drain channel. The drain fitting is securable at a drain location. An interior of the environmental control system is pressurized and the buoyant spherical ball is sealed to the drain fitting via the pressurization of the interior of the environmental control system.

These and other advantages and features will become more apparent from the following description taken in conjunction with the drawings.

### BRIEF DESCRIPTION OF THE DRAWINGS

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:

FIG. 1 is a cross-sectional view of an embodiment of a self-sealing drain fitting;

FIG. 2 is a perspective view of an embodiment of a drain fitting installed at an environmental control system;

FIG. 3 is another cross-sectional view of the self-sealing drain fitting of FIG. 1; and

FIG. 4 is a cross-sectional view of another embodiment of a self-sealing drain fitting.

The detailed description explains embodiments of the invention, together with advantages and features, by way of example with reference to the drawings.

### DETAILED DESCRIPTION OF THE INVENTION

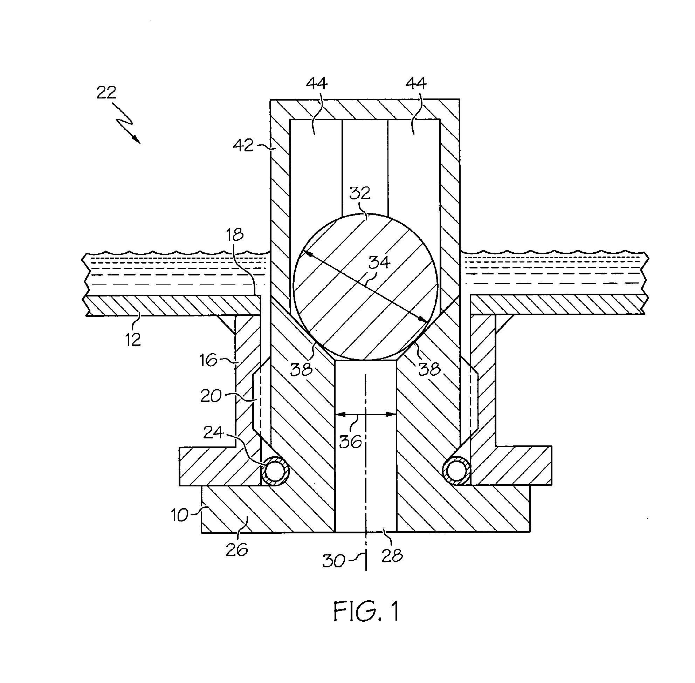

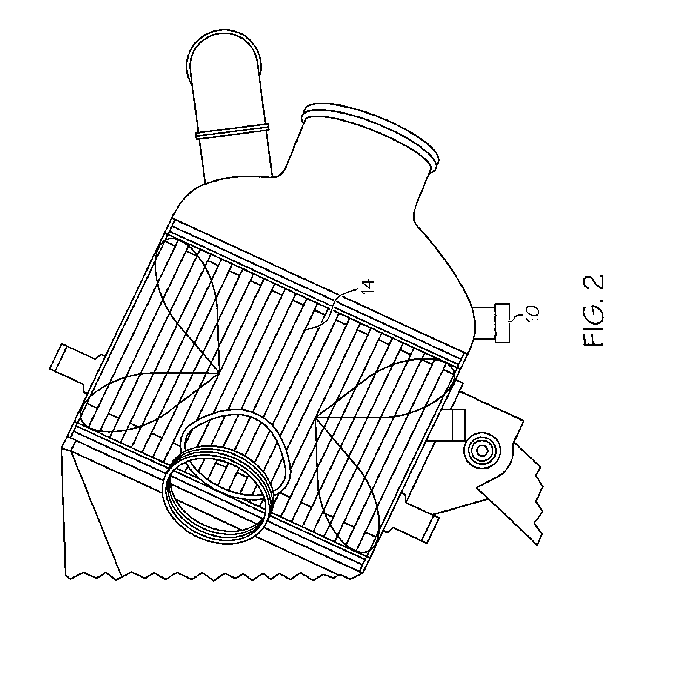

Shown in FIG. 1 is a drain fitting 10 for, for example, an environmental control system (ECS). The drain fitting 10 is located at, for example, a condenser header 12. As shown in FIG. 2, however, the drain fitting 10 may be located at any point on the ECS 14 where excess water accumulates, typically a gravitational low point.

Referring again to FIG. 1, the header 12 includes a boss 16 extending from a header hole 18 to receive the drain fitting 10. The drain fitting 10 is secured in the boss 16 by, for example a threaded connection 20 and extends through the header hole 18 into an interior 22 of the ECS 14. An o-ring 24 may be disposed between the threaded connection 20 and a head 26 of the drain fitting 10 to provide sealing between the drain fitting 10 and the boss 16. The drain fitting 10 includes at least one drain opening 28 therethrough, disposed along a fitting axis 30.

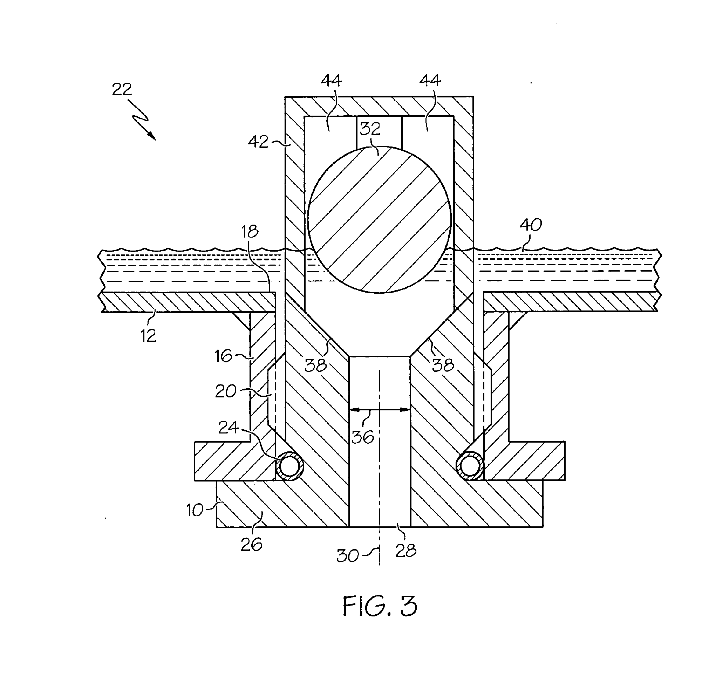

A spherical ball 32, having a ball diameter 34 greater than an opening diameter 36 of the drain opening 28 is located in the drain fitting 10 upstream of the drain opening 28. The spherical ball 32 is configured to be buoyant, and in some embodiments is formed from a plastic material, such as Vespel®. The spherical ball 32 is of a size and shape to seat to the drain opening 28 when the ECS 14 is operated due to operating pressure of the ECS 14. The pressure forces the spherical ball 32 into a chamfer 38 in the drain opening 28 with a profile which, in some embodiments, matches the profile of the spherical ball 32. The matching profiles result in a seal between the spherical ball 32 and the chamfer 38 which reduces leakage from the ECS 14 during operation. Referring now to FIG. 3, when operation of the ECS 14 is stopped, liquid 40 pools in the area of the drain fitting 10. Because the operation pressure is no longer holding the spherical ball 32 in contact with the chamfer 38, and because of characteristics of the spherical ball 32, the spherical ball 32 begins to float in the liquid 40 and moves away from the chamfer 38. The liquid 40 then is able to proceed down the drain opening 28 and away from the ECS 14 since the drain opening 28 is free of obstruction.

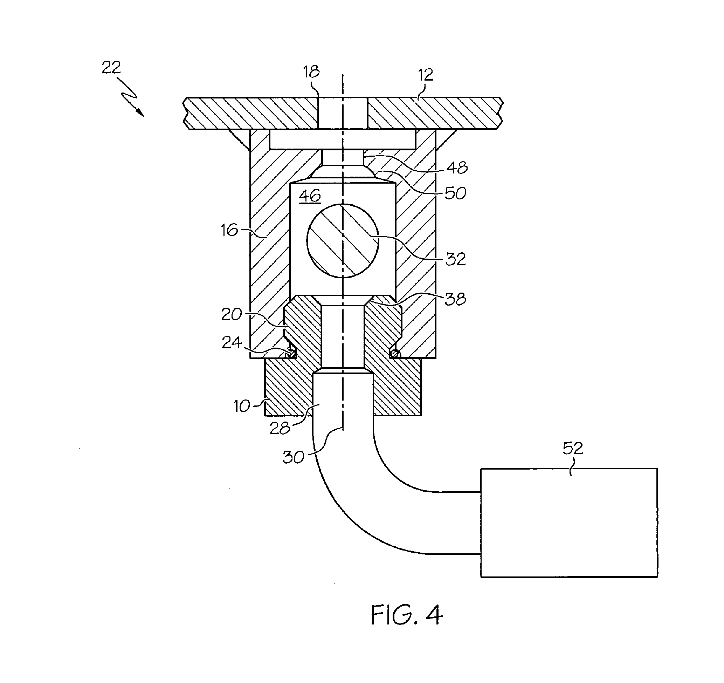

In some embodiments, the drain fitting 10 includes a retention cage 42. The retention cage 42 extends into the interior 22 around the spherical ball 32 to prevent escape of the spherical ball 32 into the interior 22 of the ECS 14. The retention cage 42 is configured with a plurality of cage openings 44 which effectively prevent escape of the spherical ball 32, but allow liquid 40 from the interior 22 to enter the drain fitting 10. In other embodiments, as shown in FIG. 4, the spherical ball 32 is located in the boss 16 and retained in a boss interior 46 by the drain fitting 10. The boss interior 46 includes a boss opening 48, of smaller diameter than the spherical ball 32 to prevent escape of the spherical ball 32 into the interior 22 of the ECS 14. Further, the boss 16 may include an interior chamfer 50, of the same shape as the spherical ball 32.

Liquid 40 drained from the drain fitting 10 may, as shown in FIG. 3, drain freely into the environment outside of the ECS 14. Alternatively, as shown in FIG. 4, the liquid 40 may drain from the drain fitting 10 to a holding tank 52 or the like for removal from the system at a later time.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the scope of the invention, which is defined by the claims. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A drain assembly comprising:
a buoyant spherical ball (32); and
a drain fitting (10) including at least one drain channel (28), the drain fitting (10) being securable at a drain location (18) wherein pressurization at the drain location (18) seals the buoyant spherical ball (32) against the drain channel (28).

2. The drain assembly of Claim 1 wherein the spherical ball (32) is configured to allow fluid (40) to flow through the drain channel (28) when the drain location (12) is not pressurized.

3. The drain assembly of Claim 1 or 2 wherein the spherical ball (32) is retained in a volume near the drain fitting (10).

4. The drain assembly of Claim 3 wherein the volume is defined by a cage (42) attached to the drain fitting (10).

5. The drain assembly of Claim 3 wherein the volume is defined by an interior (46) of a boss (16) at the drain location (18).

6. The drain assembly of any preceding Claim wherein the drain fitting (10) is secured at the drain location (18) via a threaded connection (20).

7. The drain assembly of claim 6 wherein the threaded connection (20) is sealed via installation of at least one o-ring (24).

8. The drain assembly of any preceding Claim wherein the drain fitting (10) includes a chamfer (38) disposed at the drain channel (28) receptive of the spherical ball (32).

9. An environmental control system (14) comprising:
a collection area (22) of fluid (40) in the environmental control system (14);
and
a drain assembly as claimed in any preceding claim disposed at the collection area.

10. The environmental control system (14) of Claims 4 and 9 wherein the cage (42) extends into an interior (22) of the environmental control system (14).

11. The environmental control system (14) of Claim 9 or 10 wherein the drain assembly is disposed at a gravitational low point of the environmental control system (14).

12. A method of operating a drain assembly for an environmental control system (14) comprising:
disposing the drain assembly at a fluid collection area (22) of the environmental control system (14), the drain assembly including:
a buoyant spherical ball (32); and
a drain fitting (10) including at least one drain channel (28), the drain fitting (10) securable at a drain location (18);
pressurizing an interior (22) of the environmental control system (14); and
sealing the spherical ball (32) to the drain fitting (10) via the pressurization of the interior (22) of the environmental control system (14).

13. The method of Claim 12 comprising:
depressurizing the interior (22) of the environmental control system (14);
floating the spherical ball (14) on a fluid (40) collected in the fluid collection area (22);
breaking the seal between the buoyant spherical ball (32) and the drain fitting (10) via the floatation; and
flowing the fluid (40) through the drain fitting (10) to an exterior of the environmental control system (14).
